# EUROPÄISCHE PATENTSCHRIFT

(11) **EP 3 266 299 B1**
(45) Veröffentlichungstag und Bekanntmachung des Hinweises auf die Patenterteilung: **13.03.2019**
(21) Anmeldenummer: 17178330.1
(22) Anmeldetag: 28.06.2017
(51) Int. Cl.: A01F 15/07, A01F 15/08, A01F 15/18

(54) **BALLENPRESSE**
BALING PRESS
PRESSE À BALLES

(30) Priorität: 06.07.2016 DE 102016008307
(43) Veröffentlichungstag der Anmeldung: 10.01.2018
(73) Patentinhaber: PÖTTINGER Landtechnik GmbH, 4710 Grieskirchen (AT)
(72) Erfinder: Baldinger, Markus, 4084 St. Agatha (AT); Prechtl, Wolfgang, 4722 Bruckwaasen (AT); Preimeß, Hans-Jörg, 9811 Lendorf (AT)
(74) Vertreter: Thoma, Michael

(56) Entgegenhaltungen:
- EP-A1- 0 102 530
- EP-A1- 1 495 669
- EP-A2- 1 595 439
- DE-U1-202012 006 898
- US-A- 5 165 333

## Beschreibung

Die vorliegende Erfindung betrifft eine Ballenpresse mit einer Ballenformkammer, in der halm- und/oder blattartiges Erntegut oder ähnliches Pressgut zu Ballen form- und/oder pressbar ist, wobei die Ballenformkammer zumindest ein um Umlenkrollen umlaufendes Riemenelement aufweist, das von zumindest einem Riemenspanner spannbar und von zumindest einem Antriebsrotor antreibbar ist. Die Erfindung betrifft ferner ein Verfahren zum Steuern einer Ballenpresse.

Ballenpressen sind im landwirtschaftlichen Bereich in verschiedenen Bauformen bekannt, insbesondere in Form von Rundballenpressen mit variabler oder fester Ballenkammer, bei denen der Ballenkammer eine Mehrzahl von Umlenkwalzen oder -rollen zugeordnet sind, vgl. EP 1 595 439 A2, EP 0 102 530 A1, US 5 165 333 A oder EP 1 495 669 A1. Bei teil- oder vollvariablen Ballenkammern werden hierbei oft Endlosriemen, Riemen mit Riemenverbindern oder Stabkettenelevatoren eingesetzt, die mit zunehmender Ernteguteinspeisung in den Ballenraum einen zunehmend größeren Ballenraumdurchmesser bzw. -umfang abbilden. Bei derartigen Ballenpressen werden die Umlenkwalzen bzw. -rollen zur Umlenkung der Riemen bzw. Stabketten, aber auch unmittelbar zur Erntegutumlenkung eingesetzt, und können im Ballenraum selbst, aber auch außerhalb angeordnet sein. Andererseits werden bei festen Ballenkammern die Umlenkrollen auch ohne derartige Riemen oder Stabketten entlang des Umfangs der Ballenkammer verteilt angeordnet, um unmittelbar mit den Umlenkwalzen das eingespeiste Erntegut zu Ballen zu pressen. Solche Umlenkwalzen bzw. -rollen ohne Umlenkfunktion für einen Riemen oder eine Stabkette können auch bei variablen Ballenkammern zusätzlich zu den den Riemen oder die Stabkette umlenkenden Umlenkrollen bzw. -walzen vorgesehen sein.

Eine oder mehrere der genannten Umlenkwalzen können hierbei auch als Antriebsrotor zum umlaufenden Antreiben der Riemenelemente dienen, wobei aber auch ein separater Antriebsrotor zusätzlich zu den genannten Umlenkwalzen vorgesehen sein kann. Der genannte Antriebsrotor kann beispielsweise von einem Elektromotor oder einem Hydraulikmotor, aber auch über ein Getriebe in mechanischer Weise von einer Zapfwelle her angetrieben werden, mittels derer vom Schlepper mechanische Energie an die Ballenpresse übertragbar ist.

Um die Riemen auf Spannung zu halten und auf das Erntegut drücken zu können, ist den Riemenelementen zumindest ein Riemenspanner zugeordnet, der beispielsweise von einer verfahrbaren Umlenkwalze gebildet sein kann, sodass je nach Stellung des Riemenspanners die Riemenelemente einen längeren oder kürzeren Weg zu nehmen haben.

Die Einstellung der Riemenspannung kann vorteilhafterweise verändert bzw. variabel eingestellt werden, um für verschiedene Ballenformgänge mit verschiedenen Riemenspannungen fahren zu können bzw. den Ballen- oder Pressdruck verändern zu können, mit dem das Ernte- bzw. Pressgut beim Formen beaufschlagt wird. Beispielsweise kann es vorteilhaft sein, Ballen mit geringerem Druck als üblich zu formen, wenn diese Ballen für eine nachfolgende Trocknung bestimmt sind, da dann der geformte Ballen für die Trocknung sozusagen lockerer bleibt und leichter trocknen kann. Hierzu ist es bereits bekannt, variable bzw. einstellbare Riemenspanner zu verwenden, mittels derer die Riemenspannung variiert werden kann.

Für bestimmte Anwendungen kann es hierbei vorteilhaft sein, die Riemenspannung sehr stark zu verringern, um das Erntegut mit einem möglichst geringen Pressdruck zu Ballen zu formen. Wird jedoch die Riemenspannung zu stark verringert, besteht die Gefahr, dass der Antrieb der Riemenelemente über den Antriebsrotor nicht mehr gewährleistet ist. Es kommt zu einem überhöhten Schlupf zwischen Riemen und Antriebsrotor, was zu einem Verschleiß am Riemen und/oder dem Antriebsrotor führen kann. Zum anderen kann bei zu geringer Riemenspannung die Mitnahmewirkung auf das Erntegut leiden, sodass sich der Ballen nicht mehr ordentlich formt. Für den Schlepperführer ist die Ursache oft nicht gleich ersichtlich, da Schlupf zwischen Riemenelementen und Antriebsrotor vom Führerstand aus nicht gesehen werden kann.

Zu Schlupf zwischen Antriebsrotor und Riemen kann es auch beim Entladen des Ballens kommen, wenn die umlaufenden Riemenelemente entspannt werden, beispielsweise indem der Riemenspanner zurückgefahren wird, um einem ungewollten Verbleiben des Ballens in der Ballenkammer bzw. einer ungewollten Verzögerung des Entladevorgangs entgegenzuwirken. Ein hierbei auftretender, zumindest kurzzeitig recht hoher Schlupf zwischen Riemen und Riemenantriebswalze kann nicht nur zu Verschleiß am Riemen, sondern auch zu einem vollkommenen Stillstand der Umlaufbewegung des Riemens führen, was dann den weiteren Entladevorgang und vor allem auch das Wiederspannen des Riemens beeinträchtigen kann.

Ballenpressen der eingangs genannten Art sind beispielsweise aus den Schriften DE 10 2011 010 251 A1 oder DE 20 2012 006 898 U1 bekannt. Aus der EP 1 634 491 B1 ist eine Ballenpresse bekannt, bei der der Ballenformvorgang sensorisch überwacht wird. Mehrere Ultraschallsensoren messen über die Breite verteilt den Durchmesser des sich bildenden Ballens, woraus bestimmt werden kann, ob der sich formende Ballen konvex, zylindrisch oder konkav ist. Ferner schlägt die Schrift US 4,850,271 B eine Rundballenpresse vor, bei der mittels federvorgespannter Sensoren die Spannung der Riemenelemente erfasst werden. Aus Abweichungen der Riemenspannung verschiedener Riemenelemente soll darauf geschlossen werden, ob sich der Ballen ungleichmäßig formt, beispielsweise zu einer Seite hin einen kleineren Durchmesser hat als zur anderen Seite hin.

Der vorliegenden Erfindung liegt die Aufgabe zugrunde, eine verbesserte Ballenpresse der genannten Art zu schaffen, die Nachteile des Standes der Technik vermeidet und Letzteren in vorteilhafter Weise weiterbildet. Insbesondere soll ein Ballenformen mit geringer Riemenspannung wie bspw. zum nachfolgenden Trocknen des Ballens und/oder eine geringe Riemenspannung zum Entladen des Ballens ermöglicht werden, ohne hierbei übermäßigen Verschleiß an den Riemen und Antriebskomponenten und Störungen beim Riemenlauf in Kauf nehmen zu müssen.

Erfindungsgemäß wird die genannte Aufgabe durch eine Ballenpresse gemäß Anspruch 1 sowie ein Verfahren zum Entladen des Ballens aus einer Ballenpresse gemäß Anspruch 11 gelöst. Bevorzugte Ausgestaltungen der Erfindung sind Gegenstand der abhängigen Ansprüche.

Es wird also vorgeschlagen, den Schlupf zwischen dem zumindest einen Riemenelement und dem zumindest einen Antriebsrotor zu überwachen und in Abhängigkeit des auftretenden Schlupfs zumindest einen Betriebsparameter der Ballenpresse zu steuern. Erfindungsgemäß umfasst die Ballenpresse eine Bestimmungseinrichtung zum Bestimmen von Schlupf zwischen dem Antriebsrotor und dem Riemenelement sowie eine Steuereinrichtung zum Steuern mindestens eines Betriebsparameters in Abhängigkeit des bestimmten Schlupfs. Insbesondere kann in Abhängigkeit des Schlupfs ein Betriebsparameter variiert werden, der Einfluss auf den Schlupf hat, wobei die genannte Steuereinrichtung halbautomatisch oder vollautomatisch arbeiten kann. Bei halbautomatischer Steuerung kann beispielsweise der ermittelte Schlupf und/oder ein Soll-Wert für den in Abhängigkeit des Schlupfes zu verändernden Betriebsparameters angezeigt werden, sodass ein Maschinenführer dann einen Stellaktor zum Einstellen des Betriebsparameters betätigen kann. Bei vollautomatischer Steuereinrichtung kann der entsprechende Betriebsparameter von der Steuereinrichtung selbst verstellt werden, wenn der ermittelte Schlupf zwischen Antriebsrotor und Riemenelement dies erfordert.

In Weiterbildung der Erfindung kann insbesondere die Riemenspannung in Abhängigkeit des ermittelten Schlupfs verändert bzw. gesteuert werden. Die Steuereinrichtung kann hierzu den Riemenspanner ansteuern, um die vom Riemenspanner erzeugte Riemenspannung entsprechend zu verändern.

Die genannte Steuereinrichtung kann hierbei insbesondere derart ausgebildet sein, dass die Riemenspannung nachjustiert bzw. erhöht wird, wenn der Schlupf einen vorbestimmten Grenzwert überschreitet, und/oder dass die Riemenspannung stets so hoch gehalten wird, dass der Schlupf einen vorbestimmten Grenzwert nicht überschreitet. Vorteilhafterweise kann die genannte Steuereinrichtung dabei in einem Betriebsmodus betreibbar sein, in dem die Riemenspannung so gering wie möglich, gleichzeitig jedoch ausreichend hoch gehalten wird, um zu vermeiden, dass der Schlupf einen vorbestimmten Grenzwert erreicht oder überschreitet. Die Steuereinrichtung kann hierbei einen Regler bilden, der die Riemenspannung möglichst weit absenkt, jedoch ausreichend hoch hält, um übermäßigen Schlupf zu verhindern. Ein solcher Betriebsmodus kann beispielsweise sinnvoll sein, um relativ lockere Ballen zu formen, die nachfolgend für die Trocknung bestimmt sind.

Grundsätzlich wäre es auch denkbar, alternativ oder zusätzlich zur Riemenspannung einen anderen Betriebsparameter zu verändern, um den Schlupf zu beeinflussen bzw. zu verhindern. Beispielsweise wäre es denkbar, mittels einer Andruckrolle den umlaufenden Riemen gegen den Antriebsrotor zu drücken und bei auftretendem, übermäßigem Schlupf den Riemen mit der Andruckrolle stärker gegen den Antriebsrotor zu drücken, um hierdurch die Schlupfneigung zu verringern. Alternativ oder zusätzlich wäre es auch denkbar, bei einer verfahrbaren Antriebsrolle die Antriebsrolle stärker gegen den sich formenden Ballen zu drücken, um hierdurch vom Ballen her den Riemen stärker gegen den Antriebsrotor zu drücken und damit die Schlupfneigung zu verringern. Als besonders wirkungsvoll hat es sich jedoch erwiesen, bei übermäßigem Schlupf die Riemenspannung zu erhöhen.

Der genannte Schlupf zwischen Riemenelement und Antriebsrotor kann grundsätzlich auf verschiedene Weise bestimmt werden. Gemäß einer vorteilhaften Weiterbildung der Erfindung kann ein Geschwindigkeitsunterschied zwischen dem umlaufenden Riemen und dem Antriebsrotor bestimmt werden. Hierzu kann einerseits die Umlaufgeschwindigkeit des Riemenelements bestimmt und mittels einer Vergleichseinrichtung mit der Umfangsgeschwindigkeit des Antriebsrotors verglichen werden, wobei die genannte Vergleichseinrichtung Teil der elektronisch ausgebildeten Steuereinrichtung sein kann.

Die Umlaufgeschwindigkeit des Riemenelements kann mittels einem geeigneten Riemengeschwindigkeitssensor gemessen werden, wobei hier verschieden ausgebildete Geschwindigkeitssensoren verwendet werden können, beispielsweise berührungslos arbeitende Sensoren, die den Riemen bzw. dessen Struktur abtasten. Vorteilhafterweise kann auch die Drehgeschwindigkeit einer der nicht angetriebenen Umlenkrollen gemessen bzw. bestimmt werden, um hieraus die tatsächliche Umlaufgeschwindigkeit des Riemens zu bestimmen. In diesem Fall kann ein geeigneter Drehgeschwindigkeitssensor der nicht angetriebenen Umlenkwalze zugeordnet sein.

Die Umlaufgeschwindigkeit des Riemens kann jedoch auch in anderer Weise bzw. mittelbar bestimmt werden, beispielsweise dadurch, dass die Umfangsgeschwindigkeit des sich bildenden Ballens bestimmt wird. Hierzu kann beispielsweise ein berührend oder berührungslos arbeitender Sensor den Umfang des sich bildenden Ballens abtasten bzw. beobachten und die Bewegungsgeschwindigkeit der Ballenoberfläche bestimmen. Zumindest näherungsweise ist die Ballenumfangsgeschwindigkeit ein Maß für die Umlaufgeschwindigkeit des Riemens.

Die Umlaufgeschwindigkeit des Riemens kann auch auf mehrere Weise gleichzeitig bestimmt werden. Beispielsweise kann die Drehgeschwindigkeit einer nicht angetriebenen Umlaufwalze gemessen werden und/oder direkt die Bewegungsgeschwindigkeit des Riemens erfasst bzw. abgetastet werden und/oder die Umfangsgeschwindigkeit des sich bildenden Ballens bestimmt werden, um sodann aus den verschiedenen Geschwindigkeitswerten einen Mittelwert für die Umlaufgeschwindigkeit des Riemens zu bestimmen und mit der Geschwindigkeit des Antriebsrotors für die Schlupfbestimmung zu vergleichen.

Die Umfangsgeschwindigkeit des Antriebsrotors kann grundsätzlich ebenfalls in verschiedener Weise bestimmt werden. Beispielsweise kann ein die Drehgeschwindigkeit des Antriebsrotors erfassender Sensor vorgesehen sein, aus dessen Signal dann in Verbindung mit dem bekannten Durchmesser des Antriebsrotors dessen Umfangsgeschwindigkeit berechnet werden kann. Ebenfalls ist es möglich, beispielsweise aus der bekannten Zapfwellengeschwindigkeit des Schleppers und dem ebenfalls bekannten Übersetzungsverhältnis zum Antriebsrotor hin dessen Umfangsgeschwindigkeit zu berechnen. Wird der Antriebsrotor elektromotorisch oder hydromotorisch angetrieben, kann die Umfangsgeschwindigkeit des Antriebsrotors auch aus der Drehzahl des Elektro- bzw. Hydromotors berechnet werden.

Der Riemenspanner kann grundsätzlich verschieden ausgebildet und/oder beweglich gelagert und/oder angeordnet sein. Um die Riemenspannung wirkungsvoll einstellen zu können, kann der genannte Riemenspanner vorteilhafterweise in einem Sektor der Ballenformkammer angeordnet sein, die der Entladeöffnung bei geöffneter Entladetür gegenüberliegt bzw. zumindest in einem der Entladeöffnung abgewandten Bereich der Ballenformkammer liegt.

Dem genannten Riemenspanner kann ein Stellaktor und/oder eine Spanneinrichtung zugeordnet sein, um den Riemenspanner aktiv in die gewünschte Richtung zu verbringen und/oder eine gewünschte Vorspannung auf den Stellaktor auszüben, unter der sich der Riemenspanner ggf. bewegen kann, um sich an Ballenbewegungen anpassen zu können, wobei der genannte Stellaktor von der Steuervorrichtung ansteuerbar sein kann. Ein solcher Stellaktor kann beim Entladen unterstützend verstellt werden, aber auch zum Spannen des Riemens während des Ballenformvorgangs verwendet werden, beispielsweise indem ein hydraulischer Vorspanndruck auf einen solchen Stellaktor geschaltet wird. Alternativ kann dem Riemenspanner jedoch auch eine separate Spanneinrichtung zugeordnet sein, die die Spannung des Riemenelements für den Ballenformvorgang bewirkt, wobei hier der genannte Stellaktor deaktiviert sein kann und/oder ggf. unterstützend zugeschaltet sein kann.

Die Erfindung wird nachfolgend anhand eines bevorzugten Ausführungsbeispiels und zugehöriger Zeichnungen näher erläutert. In den Zeichnungen zeigen:

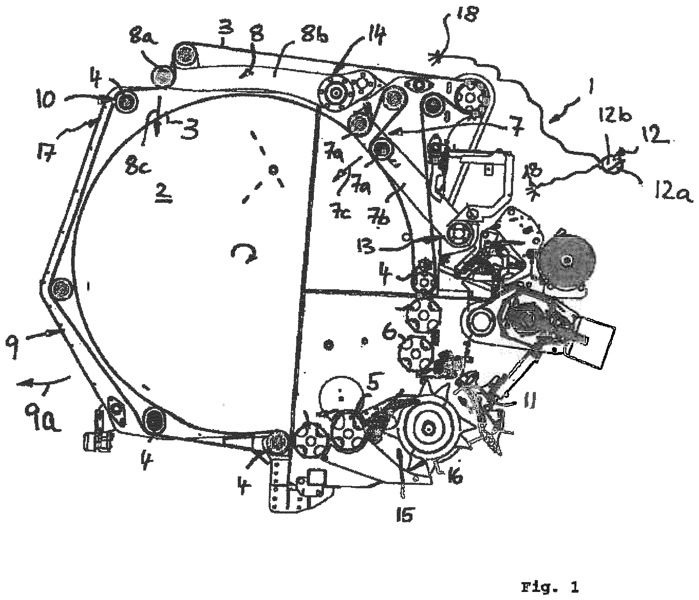

- Fig. 1:: eine schematische, teilweise geschnittene Seitenansicht einer Ballenpresse nach einer vorteilhaften Ausführung der Erfindung, wobei die variable Ballenformkammer der Ballenpresse in einer Konfiguration gezeigt ist, die einem fertig geformten Ballen entspricht.

Wie die Figur zeigt, kann die Ballenpresse 1 zum Formen und/oder Verpressen von Erntegut zu Ballen eine im Durchmesser variable Ballenformkammer 2 aufweisen, die im Wesentlichen zylindrisch konturiert sein kann. Die Ballenformkammer kann hierbei über einen Zuführkanal 11 mit Ernte- bzw. Pressgut beschickt werden, wobei der Zuführkanal 11 in an sich bekannter Weise mit einem Förderrotor 16 sowie ggf. einem Schneidwerk 15 versehen sein kann. Stromauf des Förderrotors 16 kann in an sich bekannter Weise eine Aufnahmevorrichtung, beispielsweise in Form einer Pickup mit einer rotierenden Stachelwalze, zum Aufnehmen des Ernteguts vom Boden vorgesehen sein.

Wie Fig. 1 zeigt, sind am Eingang der Ballenformkammer 2 bzw. im Übergangsbereich zwischen dem genannten Zuführkanal 11 und der Ballenformkammer 2 mehrere Form- und/oder Presswalzen und/oder Starterwalzen 5 bzw. 6 vorgesehen, die mit dem in die Ballenformkammer 2 einlaufenden Pressgut in Eingriff gelangen.

Ferner umfasst die Ballenformkammer 2 weitere Umlenkwalzen verteilt über den Umfang der Ballenformkammer 2, über welche Umlenkwalzen 4 mehrere parallel zueinander ausgerichtete Riemenelemente 3 umlaufen, deren Umlaufbahn sich an den entstehenden Ballen anschmiegt und mit diesem zusammen im Durchmesser größer wird.

Eine oder mehrere der genannten Umlenkwalzen 4 können hierbei angetrieben sein und einen Antriebsrotor bilden, mittels dessen die Riemenelemente 3 umlaufend angetrieben werden können. Alternativ oder zusätzlich kann auch ein separater Antriebsrotor zum umlaufenden Antreiben der Riemenelemente vorgesehen sein.

Den um die Umlenkwalzen 4 umlaufenden Riemenelementen 3 ist zumindest ein Riemenspanner 7 zugeordnet, wobei, wie Fig. 1 zeigt, auch mehrere Riemenspanner 7 und 8 vorgesehen sein können, um die Riemenelemente 3 spannen und die Umlaufbahn bzw. dessen Durchmesser an den beim Ballenformvorgang nach und nach größer werdenden Ballen anpassen zu können.

Wie Fig. 1 zeigt, kann hierbei ein Riemenspanner 7 auf der Seite der Ballenformkammer 2 vorgesehen sein, auf der auch der Einlauf der Ballenformkammer 2 und/oder die vorgenannten Starterwalzen 5 und 6 angeordnet sind.

Ein weiterer Riemenspanner 8 kann auf einem dem Einlauf der Ballenformkammer 2 gegenüberliegenden Abschnitt der Ballenformkammer 2 angeordnet sein, beispielsweise an einer Oberseite und/oder einer Heckseite der Ballenformkammer 2.

Die Riemenspanner 7 und 8 können jeweils eine oder mehrere Umlenkwalzen 7a bzw. 8a aufweisen, die jeweils an einem Schwenkarm 7b bzw. 8b gelagert oder in anderer Weise verstellbar sein können, wobei die Beweglichkeit der Riemenspanner 7 und 8 vorteilhafterweise derart beschaffen ist, dass die Riemenspanner 7 bzw. 8 quer zur Umlaufbahn der Riemenelemente 3 nach innen in die Ballenformkammer 2 fahrbar sind. In Fig. 1 verdeutlichen die Pfeile 7c und 8c die Verstellrichtung und/oder Vorspannrichtung der Riemenspanner 7 bzw. 8.

Um einen in der Ballenformkammer 2 geformten Ballen entladen zu können, umfasst die Ballenformkammer 2 eine Entladetür 9, die vorteilhafterweise in einem dem Einlauf der Ballenformkammer 2 und/oder den Starterwalzen 5 und 6 abgewandten Sektor der Ballenformkammer 2 angeordnet sein kann. Ist der Einlauf der Ballenformkammer 2 bugseitig vorgesehen, kann die Entladetür 9 heckseitig angeordnet sein. Ein Stellaktor 17 kann zum Öffnen der Entladetür 9 vorgesehen sein.

Die Riemenspanner 7 und 8 können von einer Steuervorrichtung 12 hinsichtlich der von ihnen bereitgestellten Riemenspannung variabel eingestellt bzw. gesteuert werden, wobei die Steuervorrichtung 12 bspw. Stellaktoren 13 und 14 zum Verstellen der Riemenspanner 7 und 8 ansteuern kann, um deren Bewegungen zu steuern. Die genannten Stellaktoren 13 und 14 können Hydraulikaktoren beispielsweise in Form von Hydraulikzylindern, elektrische Drehmotoren, Spindelantriebe oder ähnliches sein, wobei die Steuervorrichtung 12 als elektronische Steuerung beispielsweise umfassend einen Prozessor und einen Programmspeicher ausgebildet sein kann.

Um Schlupf zwischen dem Antriebsrotor und dem jeweiligen Riemenelement bestimmen zu können, umfasst die Steuereinrichtung 12 eine Schlupfbestimmungseinrichtung 12a, die vorteilhafterweise die Ist-Umlaufgeschwindigkeit der Riemenelement 3 mit der Ist-Umfangsgeschwindigkeit des Antriebsrotors vergleicht. Hierzu umfasst die Schlupfbestimmungseinrichtung 12a eine Vergleichseinrichtung 12b, der Signale zugeführt werden können, die repräsentativ sind für die genannten Geschwindigkeiten, das heißt die Umlaufgeschwindigkeit des jeweiligen Riemenelments 3 und die Umfangsgeschwindigkeit des zugehörigen Antriebsrotors.

Zur Bestimmung der Umlaufgeschwindigkeit des jeweiligen Riemenelements 3 kann einem oder jedem Riemenelement 3 ein Geschwindigkeitssensor 18 zugeordnet sein, der die jeweilige Riemengeschwindigkeit misst, beispielsweise durch Abtasten der tatsächlichen Riemenbewegung. Der genannte Geschwindigkeitssensor 18 kann beispielsweise berührungslos arbeitend ausgebildet sein oder das jeweilige Riemenelement berührend abtasten. Ebenfalls sind, wie eingangs näher geschildert, auch andere Sensoriken zum mittelbaren oder unmittelbaren Bestimmen der Riemengeschwindigkeit möglich, beispielsweise durch Messen der Drehgeschwindigkeit einer nicht angetriebenen Umlaufwalze 4 und/oder Messen der Umfangsgeschwindigkeit des sich bildenden Ballens.

Ferner kann dem Antriebsrotor ein Drehgeschwindigkeitssensor zugeordnet sein, aus dessen Signal in Verbindung mit der bekannten Durchmessergröße des Antriebsrotors dessen Umfangsgeschwindigkeit berechnet werden kann, beispielsweise von der Steuereinrichtung 12.

In Abhängigkeit des bestimmten Schlupfs kann die Steuereinrichtung 12 halbautomatisch oder vollautomatisch in die Riemenspannung eingreifen, insbesondere einen oder mehrere der Riemenspanner 7 und 8 entsprechend ansteuern, um die Riemenspannung zu erhöhen oder abzusenken. In einem vorteilhafterweise vorhandenen Betriebsmodus "lockerer Ballen" kann die Steuereinrichtung 12 die Riemenspannung soweit wie möglich absenken, jedoch so hoch halten, dass kein übermäßiger Schlupf zwischen Riemenelement und Antriebsrotor auftritt. In diesem Betriebsmodus kann die Steuereinrichtung 12 als Regler arbeiten.

## Patentansprüche

1. Ballenpresse mit einer Ballenformkammer (2), in der halm- und/oder blattartiges Erntegut oder ähnliches Pressgut zu Ballen form- und/oder pressbar ist, wobei die Ballenformkammer (2) zumindest ein um Umlenkrollen (4) umlaufendes Riemenelement (3) aufweist, das von zumindest einem Riemenspanner (7,8) spannbar und von zumindest einem Antriebsrotor antreibbar ist, **dadurch gekennzeichnet, dass** eine Schlupfbestimmungseinrichtung (12a) zum Bestimmen von Schlupf zwischen dem Antriebsrotor und dem zumindest einen Riemenelement (3) sowie eine Steuereinrichtung (12) zum Steuern zumindest eines Betriebsparameters der Ballenpresse in Abhängigkeit des bestimmten Schlupfs vorgesehen sind.

2. Ballenpresse nach dem vorhergehenden Anspruch, wobei die Steuereinrichtung (12) dazu ausgebildet ist, den genannten zumindest einen Betriebsparameter so einzustellen, dass der Schlupf einen vorbestimmten Grenzwert nicht überschreitet.

3. Ballenpresse nach einem der vorhergehenden Ansprüche, wobei die Steuervorrichtung (12) Steuermittel zum Steuern der Riemenspannung in Abhängigkeit des genannten Schlupfs aufweist.

4. Ballenpresse nach einem der vorhergehenden Ansprüche, wobei die Steuereinrichtung (12) Steuermittel zum Steuern des Anpressdrucks des Riemenelements (3) gegen den Antriebsrotor in Abhängigkeit des genannten Schlupfs aufweist.

5. Ballenpresse nach einem der vorhergehenden Ansprüche, wobei die Steuereinrichtung (12) einen Betriebsmodus besitzt, in dem die Riemenspannung möglichst weit abgesenkt, jedoch ausreichend hoch gehalten wird, sodass der genannte Schlupf zwischen dem Antriebsrotor und dem zumindest einen Riemenelement (3) einen vorbestimmten Grenzwert nicht überschreitet.

6. Ballenpresse nach einem der vorhergehenden Ansprüche, wobei die Schlupfbestimmungseinrichtung (12a) Bestimmungsmittel zum Bestimmen der Umlaufgeschwindigkeit des Riemenelements (3) und eine Vergleichseinrichtung (12b) zum Vergleichen der Umlaufgeschwindigkeit des Riemenelements (3) mit einer Umfangsgeschwindigkeit des Antriebsrotors umfasst.

7. Ballenpresse nach dem vorhergehenden Anspruch, wobei die Bestimmungsmittel einen Geschwindigkeitssensor (18) zum Messen der Riemengeschwindigkeit aufweisen.

8. Ballenpresse nach einem der beiden vorhergehenden Ansprüche, wobei die Bestimmungsmittel einen Drehgeschwindigkeitssensor zum Messen der Drehgeschwindigkeit einer nicht angetriebenen Umlenkwalze (4), um die das Riemenelement (3) umläuft, aufweist.

9. Ballenpresse nach einem der vorhergehenden Ansprüche, wobei die Bestimmungsmittel einen Umfangsgeschwindigkeitssensor zum Messen einer Ballenumfangsgeschwindigkeit des sich bildenden Ballens aufweist.

10. Ballenpresse nach einem der vorhergehenden Ansprüche, wobei die Bestimmungsmittel zum Bestimmen der Umlaufgeschwindigkeit des Riemens berührungslos arbeitend ausgebildet sind.

11. Verfahren zum Betreiben einer Ballenpresse, deren Ballenformkammer (2) zumindest ein Riemenelement (3) aufweist, das durch einen Riemenspanner (7,8) spannbar und durch einen Antriebsrotor umlaufend antreibbar ist, die Umlaufgeschwindigkeit bestimmt und mit der Umfangsgeschwindigkeit des Rotors verglichen und hieraus ein Schlupf zwischen Riemenelement und Antriebsrotor bestimmt wird, wobei in Abhängigkeit des bestimmten Schlupfs die Riemenspannung variabel eingestellt wird.

12. Verfahren nach dem vorhergehenden Anspruch, wobei die Riemenspannung so niedrig wie möglich, jedoch ausreichend hoch eingestellt wird, sodass der Schlupf zwischen Riemenelement (3) und Antriebsrotor ein vorbestimmtes Maß nicht überschreitet.

## Claims

1. Baling press with a bale-forming chamber (2), in which stalk- and/or leaf-like harvested material or similar pressing material can be formed and/or pressed into bales, wherein the bale-forming chamber (2) comprises at least one belt member (3) revolving around guide rollers, which member can be tensioned by at least one belt-tensioner (7, 8) and can be driven by at least one drive motor, **characterized in that** that a slippage-establishing unit (12a) for establishing slippage between the drive motor and the at least one belt member (3), as well as a controller unit (12) for controlling at least one operating parameter of the baling press depending upon the established slippage are provided.

2. Baling press according to the preceding claim, wherein the controller unit (12) is configured to set the mentioned at least one operating parameter such that the slippage does not exceed at pre-established threshold value.

3. Baling press according to one of the preceding claims, wherein the controller device (12) comprises controlling means for controlling the belt tension depending upon the named slippage.

4. Baling press according to one of the preceding claims, wherein the controller unit (12) comprises controlling means for controlling the contact pressure of the belt member (3) against the drive motor depending on the named slippage.

5. Baling press according to one of the preceding claims, wherein the controller unit (12) has an operating mode, in which the belt tension is lowered as much as possible, but held sufficiently high, however, so that the named slippage between the drive motor and the at least one belt member (3) does not exceed a pre-established threshold value.

6. Baling press according to one of the preceding claims, wherein the slippage-establishing unit (12a) includes establishing means for establishing the revolving speed of the belt member (3), and a comparison unit (12b) for comparing the revolving speed of the belt member (3) with a circumferential speed of the drive motor.

7. Baling press according to the preceding claim, wherein the establishing means comprise a speed sensor (18) to measure the belt speed.

8. Baling press according to one of the two preceding claims, wherein the establishing means comprise a rotational speed sensor to measure the rotational speed of an undriven guide roller (4), around which the belt member (3) revolves.

9. Baling press according to one of the preceding claims, wherein the establishing means comprises a circumferential speed sensor to measure a baling circumferential speed of the bale being formed.

10. Baling press according to one of the preceding claims, wherein the establishing means for establishing the revolving speed of the belt are configured functioning in a contactless manner.

11. Method for operating a baling press, the bale forming chamber (2) of which comprises at least one belt member (3), which member can be tensioned by a belt-tensioner (7, 8), and can be revolvingly driven through a drive motor, establishes the revolving speed and is compared with the circumferential speed of the rotor and a slippage between belt member and drive motor is established from this, wherein the belt-tensioning is set variably depending on the established slippage.

12. Method according to the preceding claim, wherein the belt-tensioning is set as low as possible, but sufficiently high, however, so that the slippage between belt member (3) and drive motor does not exceed a pre-established level.

## Revendications

1. Presse à balles avec une chambre de formation de balles (2), à l'intérieur de laquelle le produit récolté en tige et/ou en feuilles ou une matière compressée similaire peut être formé ou compacté en balles, dans lequel la chambre de formation de balles (2) présente au moins un élément de courroie (3) tournant autour des poulies de renvoi (4), qui peut être tendu par au moins un tendeur de courroie (7, 8) et peut être entrainé par au moins un rotor d'entraînement, **caractérisée en ce qu'**un dispositif de détermination du patinage (12a) pour déterminer le patinage entre le rotor d'entraînement et l'au moins un élément de courroie (3) ainsi qu'un dispositif de commande (12) pour commander au moins un paramètre de fonctionnement de la presse à balles en fonction du patinage déterminé sont prévus.

2. Presse à balles selon l'une quelconque des revendications précédentes, le dispositif de commande (12) étant conçu pour régler ledit au moins un paramètre de fonctionnement de telle sorte que le patinage ne dépasse pas un valeur seuil prédéterminé.

3. Presse à balles selon l'une quelconque des revendications précédentes, le dispositif de commande (12) présentant des moyens de commande pour commander la tension de la courroie en fonction dudit patinage.

4. Presse à balles selon l'une quelconque des revendications précédentes, le dispositif de commande (12) présentant des moyens de commande pour commander la pression de contact par l'élément de courroie (3) sur le rotor d'entraînement en fonction dudit patinage.

5. Presse à balles selon l'une quelconque des revendications précédentes, le dispositif de commande (12) possédant un mode opérationnel dans lequel la tension de la courroie est abaissée autant que possible, mais soit maintenue suffisamment haute pour que ledit patinage entre le rotor d'entraînement et l'au moins un élément de courroie (3) ne dépasse pas un valeur seuil prédéterminé.

6. Presse à balles selon l'une quelconque des revendications précédentes, le dispositif de détermination du patinage (12a) comprenant des moyens de détermination pour déterminer la vitesse de révolution de l'élément de courroie (3) et un dispositif de comparaison (12b) pour comparer la vitesse de révolution de l'élément de courroie (3) à une vitesse périphérique du rotor d'entraînement.

7. Presse à balles selon la revendication précédente, les moyens de détermination présentant un capteur de vitesse (18) pour mesurer la vitesse de la courroie.

8. Presse à balles selon l'une des deux revendications précédentes, dans lequel les moyens de détermination comportent un capteur de vitesse de rotation pour mesurer la vitesse de rotation d'un rouleau de renvoi non entraîné (4) autour duquel tourne l'élément de courroie (3).

9. Presse à balles selon l'une quelconque des revendications précédentes, les moyens de détermination présentant un capteur de vitesse périphérique pour mesurer la vitesse périphérique de la balle en formation.

10. Presse à balles selon l'une quelconque des revendications précédentes, les moyens de détermination pour définir la vitesse de révolution de la courroie étant conçus pour travailler sans contact.

11. Procédé d'exploitation d'une presse à balles dont la chambre de formation de balles (2) présente au moins un élément de courroie (3) qui peut être tendu par un tendeur de courroie (7, 8) et peut être entrainé de manière à tourner autour, par un rotor d'entraînement, définit la vitesse de révolution et la compare à la vitesse circonférentielle du rotor puis et ensuite un patinage entre l'élément de courroie et le rotor d'entraînement est déterminé, dans lequel la tension de la courroie peut être réglée de manière variable en fonction du patinage déterminé.

12. Procédé selon la revendication précédente, **caractérisé en ce que** la tension de la courroie est aussi faible que possible, mais suffisamment importante pour que le patinage entre l'élément de courroie (3) et le rotor d'entraînement ne dépasse pas un niveau prédéterminé.
